# EUROPÄISCHE PATENTANMELDUNG

(11) **EP 0 691 075 A1**
(43) Veröffentlichungstag der Anmeldung: **10.01.1996**
(21) Anmeldenummer: 95107682.7
(22) Anmeldetag: 19.05.1995
(51) Int. Cl.: A01K 5/02

(54) **Vorrichtung zum kontinuierlichen Füttern**

(30) Priorität: 06.06.1994 DE 4419688; 09.06.1994 DE 4420143
(71) Anmelder: Urban Fütterungstechnik, D-27798 Wüsting (DE)
(72) Erfinder: Urban, Helmut, D-27798 Wüsting (DE)
(74) Vertreter: Winkler, Andreas, Dr.

(57) **Zusammenfassung**

Vorrichtung zum kontinuierlichen Füttern, mit einem Pulvervorratsbehälter (12) und einem Schneckendosierer (14), gekennzeichnet durch einen Behälter (16), der aus drei konzentrischen Kammern (18,20,22) besteht, wovon die innerste Kammer (18) als Anrühr- und Futterbehälter, die mittlere nach oben hin geschlossene Kammer (20) zum Erwärmen des Futters und die äußere Kammer (22) als Vorrats- und Warmhaltebehälter dient, wobei der Behälter durch einen Deckel (24), der eine verschließbare Pulvereinfallöffnung (26) aufweist, verschließbar und seine Außenwand höher als die die Kammern abtrennenden Wände ist, und eine Pumpe, die zum einen beim Anrühren des Futters als Rührmotor in einem Rührkreislauf "innerste Kammer-Pumpe-innerste Kammer", zum anderen beim Füttern zum Pumpen des Futters in einen der beiden Futterkreisläufe "innerste Kammer-Pumpe-Futterstation/en-äußere Kammer" und "äußere Kammer-Pumpe-Futterstation/en-äußere Kammer" dient.

## Beschreibung

Die Erfindung betrifft eine Vorrichtung zum kontinuierlichen Füttern mit einem Pulvervorratsbehälter und einem Schneckendosierer.

Fütterautomaten dienen dazu, die Fütterung von z.B. Kälbern zu erleichtern, und zwar sowohl beim Anrühren als auch beim Ver- bzw. Zuteilen des normalerweise aus mindestens einer pulverförmigen und einer flüssigen Komponente bestehenden Futters. Mittels herkömmlicher Fütterautomaten lassen sich jedoch nur begrenzte Mengen anrühren und über einen Futterkreislauf verteilen. Wenn das angerührte Futter aufgebraucht ist, muß erst wieder neues angerührt werden. Das führt zu Stillstandszeiten und verhindert somit eine kontinuierliche Fütterung. Darüber hinaus schwankt bei herkömmlichen Fütterautomaten die Homogenität des angerührten Futters (Milch), was zu Verdauungsproblemen bei Kleinkälbern führen kann, und ist die Dosiergenauigkeit aufgrund von z.B. Pulververklumpen gering. Schließlich weisen diese Automaten bezüglich der Futterhygiene Defizite auf, da aufgrund ihrer offenen Bauweise Fliegen und Schmutz in das Futter gelangen können.

Der Erfindung liegt daher die Aufgabe zugrunde, eine Vorrichtung zum kontinuierlichen Füttern zu schaffen, bei der das Futter durch Anrühren von Komponenten in genau bestimm- und reproduzierbaren Mischungsverhältnissen und mit großer Homogenität hergestellt werden kann. Ferner soll die Vorrichtung weniger störanfällig sein und bessere hygienische Verhältnisse bei der Zubereitung des Futters ermöglichen.

Erfindungsgemäß wird diese Aufgabe durch einen Behälter, der aus drei konzentrischen Kammern besteht, wovon die innerste Kammer als Anrühr- und Futterbehälter, die nach oben hin geschlossene mittlere Kammer zum Erwärmen des Futters und die äußere Kammer als Vorrats- und Warmhaltebehälter dient, wobei der Behälter durch einen Deckel, der eine verschließbare Pulvereinfallöffnung aufweist, verschließbar ist und seine Außenwand höher als die die Kammern abtrennenden Wände ist, und eine Pumpe gelöst, die zum einen beim Anrühren des Futters als Rührmotor in einem Rührkreislauf "innerste Kammer-Pumpe-innerste Kammer", zum anderen beim Füttern zum Pumpen des Futters in einen der beiden Futterkreisläufe "innerste Kammer-Pumpe-Futterstation/en-äußere Kammer" und "äußere Kammer-Pumpe-Futterstation/en-äußere Kammer" dient.

Vorzugsweise ist die Pulvereinfallöffnung mittels eines Deckels verschließbar.

Dabei kann vorgesehen sein, daß der Deckel mittels einen Motors schwenkbar ist.

In einer bevorzugten Ausführungsform der Erfindung weist die äußere Kammer einen Füllstandsmesser auf.

Weiterhin kann vorgesehen sein, daß die innerste Kammer einen Füllstandsmesser aufweist.

In einer weiteren Ausführungsform der Erfindung weist die mittlere Kammer einen Temperatursensor auf.

Darüber hinaus kann vorgesehen sein, daß die innerste Kammer einen Zulauf für eine weitere Futterkomponente aufweist.

Vorzugsweise weist die mittlere Kammer eine Heizwendel auf.

Ferner kann vorgesehen sein, daß der Pulvervorratsbehälter im Bereich der Schnecke einen Sensor zur Pulverstandserfassung aufweist.

Vorzugsweise sind im Rührkreislauf und in den beiden Unterkreisläufen Ventile vorgesehen.

In einer besonderen Ausführungsform der Erfindung dient ein Prozeßrechner zur Steuerung der Vorrichtung.

Schließlich kann vorgesehen sein, daß der Prozeßrechner zur Steuerung von Futterstationen dient.

Vorzugsweise ist der Behälter wärmeisoliert.

Der Erfindung liegt die Erkenntnis zugrunde, daß durch die Verwendung eines Behälters, der in drei konzentrische Kammern aufgeteilt ist, simultan Futter angerührt und über Futterkreisläufe an Futterstationen verteilt werden kann. Da auch die innerste und die äußerste Kammer sowie die Futterkreisläufe gleichzeitig gereinigt werden können, verursacht die Reinigung nur eine geringe Unterbrechung. Der mittels eines Deckels verschließbare Behälter verhindert, daß Fliegen und Schmutz in das Futter gelangen können und erhöht somit die Hygiene bei der Futterzubereitung. Darüber hinaus verhindert die mit einem Deckel verschließbare Pulvereinfallöffnung, die nur für die Zugabe von Pulver geöffnet wird, daß Dampf beim Erwärmen des Futters aufsteigen kann und zum Verklumpen des über dem Behälter im Pulvervorratsbehälter bzw. in dem Schneckendosierer befindlichen Pulvers führt. Dadurch wird gewährleistet, daß das Pulver in definierten Mengen und homogen dosiert wird.

Weitere Merkmale und Vorteile der Erfindung ergeben sich anhand der nachstehenden Beschreibung, in der ein Ausführungsbeispiel anhand von schematischen Zeichnungen im einzelnen erläutert ist. Dabei zeigt:
- Fig. 1: eine Querschnittsansicht einer Vorrichtung zum kontinuierlichen Füttern gemäß der Erfindung;
- Fig. 2: eine Aufsicht auf die Vorrichtung von Fig. 1,
- Fig. 3: einen Funktionsablaufplan der Vorrichtung von Fig. 1.

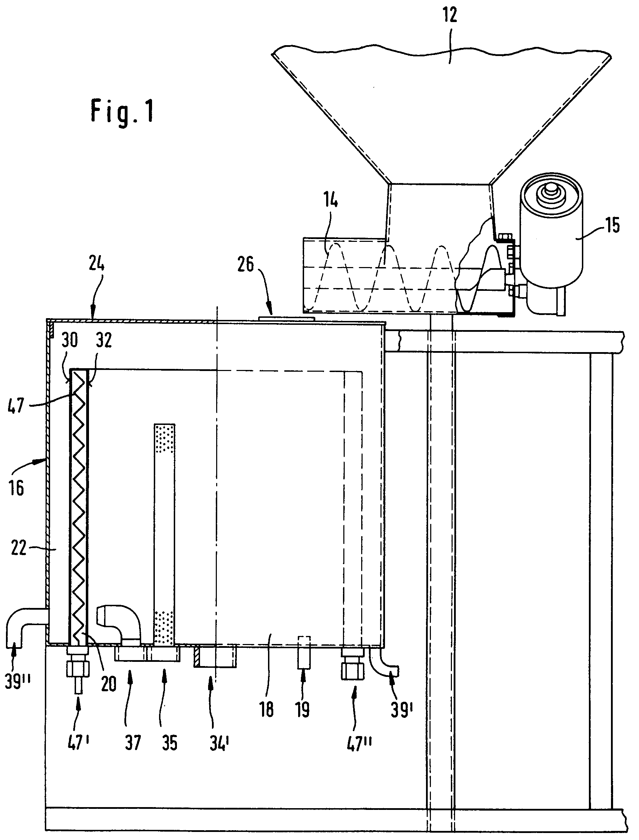

Fig. 1 zeigt eine Vorrichtung zum kontinuierlichen Füttern gemäß der Erfindung im Querschnitt. Oberhalb eines Behälters 16 befindet sich ein Pulvervorratsbehälter 12, an dessen Unterseite ein mit einem Motor 15 angetriebener Schneckendosierer horizontal angeordnet ist. Der Behälter 16 wird durch einen Deckel 24 verschlossen, der eine Pulvereinfallöffnung 26 aufweist. Der Behälter 16 ist in drei konzentrische Kammern 18, 20, 22 eingeteilt. Die innerste Kammer 18 dient als Anrühr- und Futterbehälter. Sie ist mit einem Wasserzulauf 35, einem Pumpenzulauf 34' und einem Rührkreislauf 37 versehen. Über einen Zulauf 19 kann dem Futter eine weitere Futterkomponente (z. B. Vollmilch) zugeführt werden. Die mittlere Kammer 20 dient zum Erwärmen des Futters. Sie ist nach oben hin geschlossen. Über einen Wasserzulauf 47' und einen Wasserausgleich 47'' wird Wasser zu- und abgeführt, das innerhalb der mittleren Kammer 20 mittels einer Heizwendel 47 erwärmt wird. Die äußere Kammer 22 dient als Vorrats- und Warmhaltebehälter und ist mit einem Futterkreiszulauf 39' und einem Futterkreiszulauf 39'' versehen.

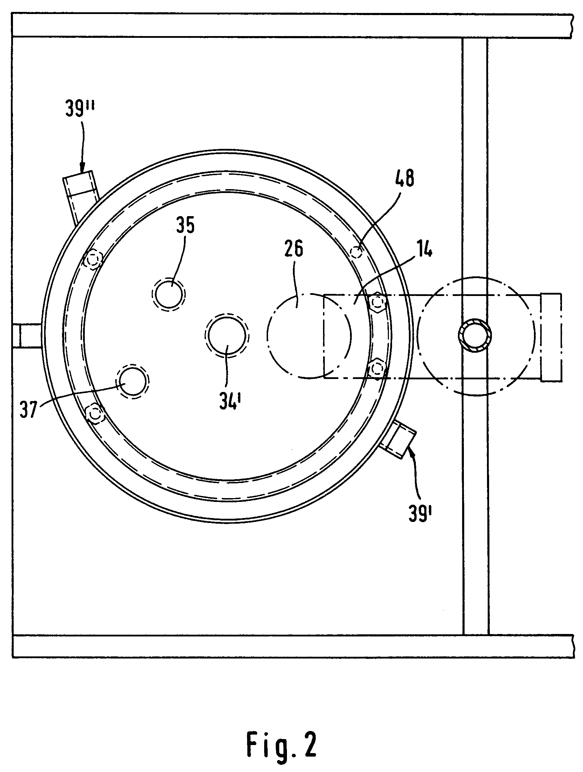

Fig. 2 zeigt dieselbe Vorrichtung in Aufsicht. Ein Temperatursensor 48 ist in die mittlere Kammer 20 zusätzlich eingezeichnet.

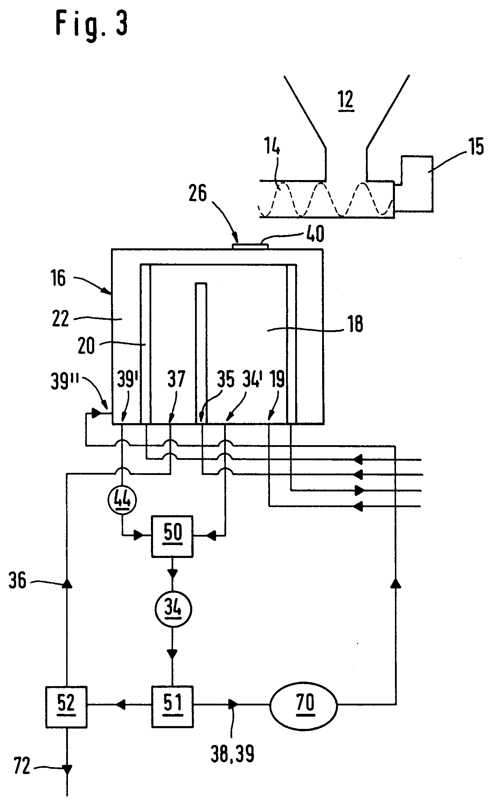

Fig. 3 zeigt schematisch einen Funktionsablaufplan für die Vorrichtung zum kontinuierlichen Füttern gemäß der Erfindung. Der Übersichtlichkeit halber sind nur die wichtigstens Funktionselemente eingezeichnet. Beim Erststart sieht der Funktionsablauf wie folgt aus:
Ein Füllstandsmesser 44 in der äußere Kammer 22 meldet, daß die äußere Kammer 22 leer ist. Daher werden eine Pumpe 34 und eine Futterstation 70 gesperrt. Ventil 50 schaltet in Arbeitsstellung (Futterfluß von äußerer Kammer 22 zu Pumpe 34). Über ein Ventil (nicht gezeigt) wird warmes Wasser der innersten Kammer 18 zugeführt. Nachdem das Ventil wieder geschlossen worden ist, wird die Pulvereinfallöffnung 26 über einen Motor (nicht gezeigt) geöffnet, der einen Deckel 40 zur Seite schwenkt. Mittels des motorgetriebenen Schneckendosierers 14 wird Pulver in die innerste Kammer 18 gegeben. Danach wird der Deckel 40 wieder über die Pulvereinfallöffnung 26 geschwenkt und somit der Behälter 16 verschlossen. Ventil 50 schaltet mit Verzögerung zu Ventil 51, so daß mittels der Pumpe 34 das Wasser mit em Pulver über einen Rührkreislauf 36 vermengt wird. Nach einer über einen Prozeßrechner (nicht gezeigt) eingestellten Zeit wird die Pumpe 34 abgeschaltet und Ventil 51 schaltet in Ruhestellung (Futterfluß von Pumpe 34 über Futterkreislauf 38 in äußere Kammer 22). Da die äußere Kammer verhältnismäßig schmal ist, findet eine gute Wärmeübertragung zwischen der mittleren Kammer 20 (Heizkammer) und dem Futter statt. Bei längerem Pumpen läuft das Futter von der äußeren Kammer 22 in die innere Kammer 18 über. Dabei fließt das Futter in einem dünnen Film über die Wände 30, 32, wodurch sich eine verbesserte Wärmeübertragung und somit eine gleichbleibende Futtertemperatur ergibt. Wenn der Füllstandsmesser 44 in der äußeren Kammer 22 das Vorhandensein von Futter meldet, wird eine Futterstation 70 zum Füttern freigegeben.

Der Funktionsablauf sieht beim erneuten Anrühren von Futter wie folgt aus:
Ein in der innersten Kammer 18 befindlicher Füllstandsmesser (nicht gezeigt) meldet, daß die innerste Kammer 18 leer ist. Daraufhin werden die Pumpe 34 und die Futterstation 70 abgeschaltet. Das Ventil 50 schaltet in Arbeitsstellung (äußere Kammer 22 zu Pumpe 34). Die Futterstation 70 und die Pumpe 34 werden wieder betriebsbereit geschaltet und z.B. die Kälber können aus der äußeren Kammer 22 über den Futterkreislauf 39 gefüttert werden. Wie oben beschrieben, wird jetzt in der innersten Kammer 18 neues Futter angerührt und anschließend mittels des Ventils 51 das neu angerührte Futter in den Futterkreislauf 38 geleitet.

Die Reinigung der Vorrichtung erfordert nur eine geringe Unterbrechungszeit, da sowohl die innerste 18 und die äußerste Kammer 20 als auch die Futterkreisläufe 38, 39 gleichzeitig gereinigt werden können.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 12: Pulvervorratsbehälter
- 14: Schneckendosierer
- 15: Motor
- 16: Behälter
- 18: innerste Kammer
- 19: Zulauf
- 20: mittlere Kammer
- 22: äußere Kammer
- 24: Deckel für Behälter 16
- 26: Pulvereinfallöffnung
- 30, 32: Wand
- 34: Pumpe
- 34': Pumpenzulauf
- 35: Wasserzulauf
- 36: Rührkreislauf
- 37: Rührkreisrücklauf
- 38, 39: Futterkreislauf
- 39': Futterkreiszulauf
- 39'': Futterkreisrücklauf
- 40: Deckel für Pulvereinfallöffnung
- 44: Füllstandsmesser in äußerer Kammer 22
- 47: Heizwendel
- 47': Wasserzulauf
- 47'': Wasserausgleich
- 48: Temperatursensor
- 50, 51, 52: Ventil
- 70: Futterstation
- 72: Abfluß

## Patentansprüche

1. Vorrichtung zum kontinuierlichen Füttern, mit einem Pulvervorratsbehälter und einem Schneckendosierer, gekennzeichnet durch einen Behälter (16), der aus drei konzentrischen Kammern (18, 20, 22) besteht, wovon die innerste Kammer (18) als Anrühr- und Futterbehälter, die nach oben geschlossene mittlere Kammer (20) zum Erwärmen des Futters und die äußere Kammer (22) als Vorrats- und Warmhaltebehälter dient, wobei der Behälter (16) durch einen Deckel (24), der eine verschließbare Pulvereinfallöffnung (26) aufweist, verschließbar und seine Außenwand höher als die die Kammern abtrennenden Wände (30, 32) ist, und eine Pumpe (34), die zum einen beim Anrühren des Futters als Rührmotor in einem Rührkreislauf (36) "innerste Kammer-Pumpe-innerste Kammer", zum anderen beim Füttern zum Pumpen des Futters in einen der beiden Futterkreisläufe (38) "innerste Kammer-Pumpe-Futterstation/en-äußere Kammer" und (39) "äußere Kammer-Pumpe-Futterstation/en-äußere Kammer" dient.

2. Vorrichtung nach Anspruch 1, dadurch gekennzeichnet, daß die Pulvereinfallöffnung (26) mittels eines Deckels (40) verschließbar ist.

3. Vorrichtung nach Anspruch 2, dadurch gekennzeichnet, daß der Deckel (40) mittels eines Motors schwenkbar ist.

4. Vorrichtung nach einem der vorangehenden Ansprüche, dadurch gekennzeichnet, daß die äußere Kammer (22) einen Füllstandsmesser (44) aufweist.

5. Vorrichtung nach einem der vorangehenden Ansprüche, dadurch gekennzeichnet, daß die innerste Kammer (18) einen Füllstandsmesser aufweist.

6. Vorrichtung nach einem der vorangehenden Ansprüche, dadurch gekennzeichnet, daß die innerste Kammer (18) einen Zulauf (19) für eine weitere Futterkomponente aufweist.

7. Vorrichtung nach einem der vorangehenden Ansprüche , dadurch gekennzeichnet, daß die mittlere Kammer (20) einen Temperatursensor (48) aufweist.

8. Vorrichtung nach einem der vorangehenden Ansprüche, dadurch gekennzeichnet, daß die mittlere Kammer (20) eine Heizwendel (47) aufweist.

9. Vorrichtung nach einem der vorangehenden Ansprüche, dadurch gekennzeichnet, daß der Pulvervorratsbehälter (12) im Bereich des Schneckendosierers (14) einen Sensor zur Pulverstandserfassung aufweist.

10. Vorrichtung nach einem der vorangehenden Ansprüche, dadurch gekennzeichnet, daß im Rührkreislauf und in den beiden Futterkreisläufen (38, 39) Ventile (50, 51, 52) vorgesehen sind.

11. Vorrichtung nach einem der vorangehenden Ansprüche, dadurch gekennzeichnet, daß ein Prozeßrechner zur Steuerung derselben dient.

12. Vorrichtung nach Anspruch 11, dadurch gekennzeichnet, daß der Prozeßrechner zur Steuerung von Futterstationen (70) dient.

13. Vorrichtung nach einem der vorangehenden Ansprüche, dadurch gekennzeichnet, daß der Behälter (16) wärmeisoliert ist.
